# EUROPEAN PATENT APPLICATION

(11) **EP 1 826 673 A2**
(43) Date of publication of application: **29.08.2007**
(21) Application number: 07250724.7
(22) Date of filing: 21.02.2007
(51) Int. Cl.: G06F 9/50

(54) **Device management system for processing client requests**

(30) Priority: 22.02.2006 US 360791
(71) Applicant: Ricoh Company, Ltd., Tokyo 143-8555 (JP)
(72) Inventor: Lifen, Tian, Cupertino California 95014-5924 (US); Wu, Yuwen, Cupertino California 95014-5924 (US)
(74) Representative: Leeming, John Gerard

(57) **Abstract**

A device management system is provided for processing client requests. When a client request is received, the device management system selects a particular network device from a plurality of available network devices to process the request. The selection is based upon user preference data and network device attribute data. The user preference data indicates one or more attributes that a user associated with the client request would like a network device that processes the request to have. The user preference data may also indicate a relative priority of desired network device attributes. The network device attribute data indicates one or more attributes of the plurality of available network devices. Examples of the attributes indicated by the user preference data and device attributes include performance attnbutes, such as resolution, speed and finishing options, as well as other device attributes, such as location.

## Description

This invention relates generally to a device management system for processing client requests.

The approaches described in this section are approaches that could be pursued, but not necessarily approaches that have been previously conceived or pursued. Therefore, unless otherwise indicated, the approaches described in this section may not be prior art to the claims in this application and are not admitted to be prior art by inclusion in this section.

One of the issues with network devices is that users are not aware of which network device is the best device to process their requests. Conventionally, users install one or more drivers on their client device and then select a particular network device as their default device for processing requests. For example, a user may install two printer drivers for two printers located nearby and then select one of the two printers as a default printer for processing all of the user's print requests. The user makes a decision about which of the two printers should be designated as the default printing device based upon the information available to the user at that time. This typically includes, for example, the location and the known capabilities and status of the two printers. From that point on, the user has little information about changes in capabilities or status of the printers, other than that which can be obtained from viewing the processing status of a request sent by the user. For example, the user is not conventionally aware of any errors that have occurred at the default printing device until the user submits a new request and realizes that the new request has not been processed. In this situation, job queue monitors generally provide few, if any, details about the nature of the error.

In the context of mobile devices, users may be even less aware of the capabilities and status of available network devices. For example, users of laptop computers or personal digital assistants (PDAs) may move from location to location and not be aware of the available printing devices at a new location. In these situations, users may use their mobile device to identify accessible networks and available network devices on those networks. For example, a user of a laptop computer visiting a particular location of a company may be able to identify an accessible wireless network and one or more available devices on the wireless network. In the situation where the user wants to print an electronic document, the user may be able to identify one or more available printing devices connected to the network. The user however, cannot remotely determine the capabilities, performance, current status or location of the available printing devices if the user's client device does not have a printer driver installed and selected for the identified printing devices. Thus, the user must rely upon personal inspection of the printing devices to determine this information. This can be a frustrating process for the user, especially in situations where the current status of the printing devices changes over time. Based on the foregoing, there is a need for greater visibility into the availability and status of network devices.

A device management system is provided for processing client requests. When a client request is received, the device management system selects a particular network device from a plurality of available network devices to process the request. The selection is based upon user preference data and network device attribute data. The user preference data indicates one or more attributes that a user associated with the client request would like a network device that processes the request to have. The user preference data may also indicate a relative priority of desired network device attributes. The network device attribute data indicates one or more attributes of the plurality of available network devices. The device management system may include a discovery mechanism to automatically discover the plurality of available network devices and obtain the device attributes of the plurality of network devices. The device management system may also include a mechanism for processing events generated by the plurality of network devices. One or more user interface objects may be displayed on a graphical user interface (GUI) of a client device in a manner that indicates the attributes and current status of the plurality of available network devices and the particular network device. The one or more user interface objects may be dynamically updated over time to reflect changing attributes or attribute values or changing status of the plurality of available network devices. The device management system may also include a recommendation mechanism that automatically identifies one or more network devices that satisfy the user preference data and recommends the one or more network devices to a user. The device management system may also interact with external supply and maintenance management systems to provide network device status and identify required service and also to confirm when service has been completed.

The present invention will be described below with reference to exemplary embodiments and the accompanying drawings in which like reference numerals refer to similar elements, and:

FIG. 1 is a block diagram of an example arrangement on which embodiments of the invention may be implemented.

FIG. 2 is a block diagram of an example implementation of device management system according to one embodiment of the invention.

FIG. 3A is a block diagram that depicts example general device information that might apply to any type of network device.

FIG. 3B is a block diagram that depicts example device information for a network scanner device.

FIG. 4 is a block diagram that depicts an example user interface that includes a user input portion, a network map portion and a device input display portion.

FIG. 5 is a flow diagram that depicts how device evaluation module is configured to automatically determine a particular network device that is best suited to process a request from a client device based upon user preference data and device management data, according to one embodiment of the invention.

FIG. 6 is a block diagram of a computer system on which embodiments of the invention may be implemented.

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention. Various aspects of the invention are described hereinafter in the following sections:
**I. OVERVIEW**
**II**. **ARCHITECTURE OVERVIEW**
**III. DEVICE MANAGEMENT SYSTEM OVERVIEW**
**IV. USER PREFERENCE DATA**
**V. NETWORK DEVICE DISCOVERY**
**VI. EVENT PROCESSING AND STATUS REPORTING**
**VII. CLIENT REQUEST PROCESSING**
**VIII. NETWORK DEVICE RECOMMENDATION**
**IX. SUPPLY AND MAINTENANCE MANAGEMENT**
**X. IMPLEMENTATION MECHANISMS**

### I. OVERVIEW

A device management system is provided for processing client requests. When a client request is received, the device management system selects a particular network device from a plurality of available network devices to process the request. The selection is based upon user preference data and network device attribute data. The user preference data indicates one or more attributes that a user associated with the client request would like a network device that processes the request to have. The user preference data may also indicate a relative priority of desired network device attributes. The network device attribute data indicates one or more attributes of the plurality of available network devices. Examples of the attributes indicated by the user preference data and device attributes include performance attributes, such as resolution, speed and finishing options, as well as other device attributes, such as location. The particular network device is the network device from the plurality of available network devices that has device attributes that best match the user preference data.

The device management system may include a discovery mechanism to automatically discover the plurality of available network devices and obtain the device attributes of the plurality of network devices. The device management system may also include a mechanism for processing events generated by the plurality of network devices. One or more user interface objects may be displayed on a graphical user interface (GUI) of a client device in a manner that indicates the attributes and current status of the plurality of available network devices and the particular network device. The one or more user interface objects may be dynamically updated over time to reflect changing attributes or attribute values or changing status of the plurality of available network devices.

The device management system may also include a recommendation mechanism that automatically identifies one or more network devices that satisfy the user preference data and recommends the one or more network devices to a user. For example, one or more user interface objects may be displayed on a graphical user interface (GUI) in a manner that indicates attributes of the recommended network devices. A user may select a particular network device from the recommended network devices and the particular network device is used to process the request. The device management system may also interact with external supply and maintenance management systems to provide network device status and identify required service and also to confirm when service has been completed.

### II. ARCHITECTURE OVERVIEW

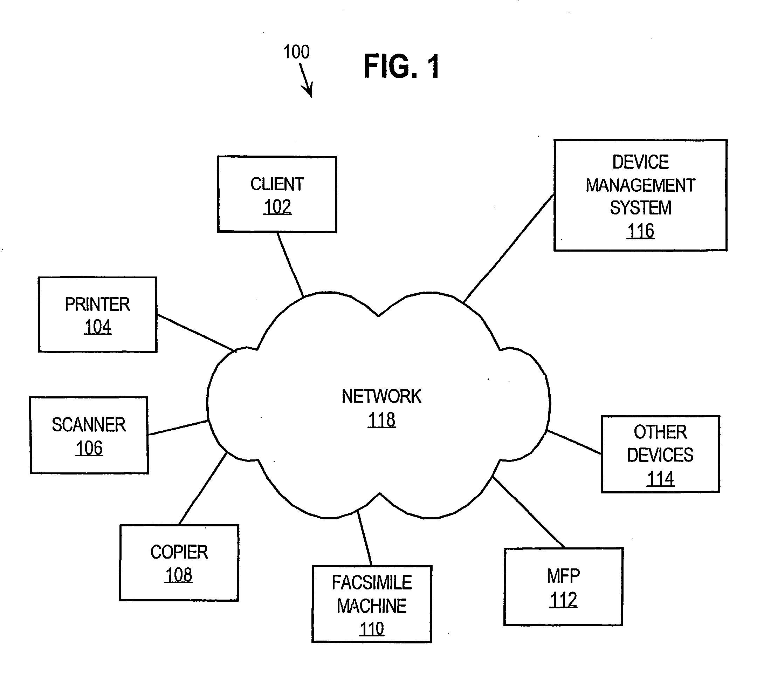

FIG. 1 is a block diagram of an example arrangement 100 on which embodiments of the invention may be implemented. Arrangement 100 includes a client 102, a printer 104, a scanner 106, a copier 108, a facsimile machine 110, a multi-function peripheral (MFP) 114 and a device management system 116 communicatively coupled via a network 118. Network 118 may be implemented by any medium or mechanism that provides for the exchange of data between the various elements in arrangement 100. Examples of network 118 include, without limitation, a network such as a Local Area Network (LAN), Wide Area Network (WAN), Ethernet or the Internet, or one or more terrestrial, satellite or wireless links.

### III. DEVICE MANAGEMENT SYSTEM OVERVIEW

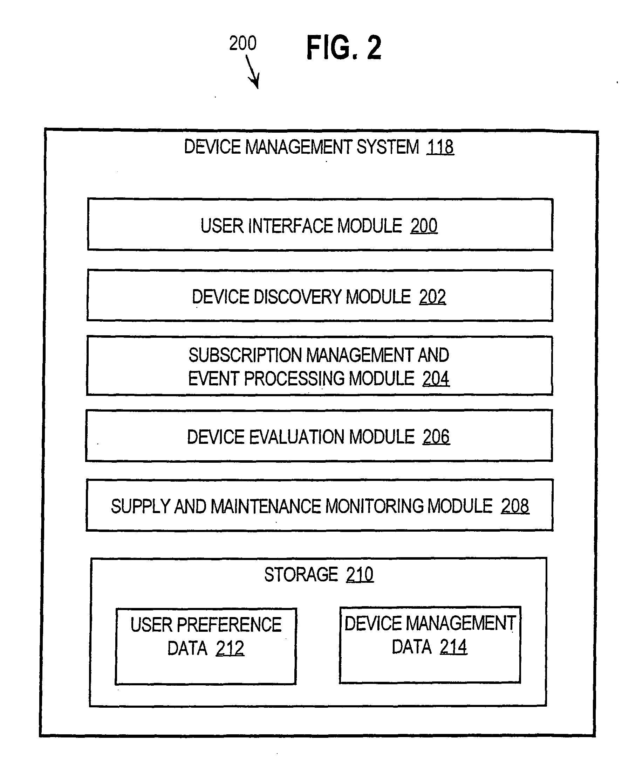

FIG. 2 is a block diagram of an example implementation of device management system 118 according to one embodiment of the invention. In this example, device management system 118 includes a user interface module 200, a device discovery module 202, a subscription management and event processing module 204, a device evaluation module 206, a supply and maintenance monitoring module 208 and storage 210. These modules may be implemented in hardware, software, or any combination of hardware and software. The functionality of each of these modules is described in more detail hereinafter.

Storage 210 may be implemented by any type of volatile, non-volatile or any combination of volatile and non-volatile storage, depending upon a particular implementation.
In the present example, user preference data 212 and device management data 214 are stored on storage 210 and are described in more detail hereinafter.

### IV. USER PREFERENCE DATA

User preference data 212 may specify a wide variety of information, depending upon a particular implementation, and the invention is not limited to any particular user preference data 212. User preference data 212 may include subscription data that indicates one or more attributes of device information that users want to receive. For example, the subscription data may indicate networks, subnetworks, portions of networks, types of devices or particular devices that users want to monitor. A user may be regularly using a particular printer and want to be notified of any events generated by the particular printer. The subscription data may also indicate particular types of events that the user is interested in being notified of. For example, the user may want to be notified of any events related to error conditions pertaining to the particular printer, but may not want to be notified of events pertaining to routine maintenance. The subscription data may also indicate subscription expiration times.

According to one embodiment of the invention, user preference data 212 includes device selection criteria that indicates device attributes that users would like network devices that process their requests to have. Example device attributes include, without limitation, device type, device location and device capabilities, such as resolution, speed and finishing options.
For example, the device selection criteria may indicate that network devices that process requests from the particular user should have a scanning resolution of at least 600dpi, a printing speed of at least 65ppm or color printing capability. Device selection criteria may further indicate that network devices that process requests from the particular user have particular finishing options, such as hole punching, stapling or binding. Device selection criteria may also indicate that network devices that process requests from the particular user be at a particular location, or within a geographic region, for example within a particular building or a particular area within a particular building.

The device selection criteria may also indicate a relative priority of network device attributes. For example, the device selection criteria may indicate that device capabilities, such as resolution or speed have a relatively higher priority than location. As another example, a particular user may want to print an electronic document that contains sensitive information and therefore wants the electronic document printed at a particular location. In this situation, the device selection criteria for the particular user may specify that location is the highest priority attribute. The device selection criteria may also specify that a particular device selection criteria must be satisfied. In the prior example, the user may want the electronic document that contains sensitive information to be printed only at a printing device having certain attributes, such as a secure printing feature or be located at particular locations. The use of user preference data 212 to process client requests is described in more detail hereinafter.

User preference data 212 may be generated at client devices and then stored onto device management system 116. According to one embodiment of the invention, user preference data 212 may be generated via user interface module 200. For example, user interface module 200 may be configured to generate user interface data which, when processed at a client device, provides a user interface for a user to specify the user preference data 212. The user then enters their user preference data 212 via the user interface and the user preference data 212 is transmitted from the user's client device to the device management system 116. User preference data 212 may be structured and formatted in a wide variety of ways, depending upon a particular implementation, and the invention is not limited to any particular structure or format for user preference data 212.

### V. NETWORK DEVICE DISCOVERY

According to one embodiment of the invention, device discovery module 202 is configured to discover network devices and obtain information about the network devices. The discovery of network devices and obtaining information from network devices may be performed using a variety of techniques that may vary depending upon a particular implementation and the invention is not limited to any particular technique. Device discovery module 202 may be configured to use any type of Web services discovery algorithm to implement any of the functionality described herein. For example, device discovery module 202 may monitor network traffic to detect the presence of a new network device. Some network devices are configured to transmit broadcast messages to indicate their availability when they are first put into service, when they are put back into service or when their metadata changes. In response to detecting a broadcast message, device discovery module 202 may query the network device that transmitted the broadcast message for additional information. For example, in the situation where device discovery module 202 receives a broadcast message from a particular new network device indicating that the particular new network device is now available, the device discovery module 202 queries the particular new network device for metadata that indicates the attributes of the particular new network device. As another example, in the situation where device discovery module 202 receives a broadcast message from an existing network device indicating that its metadata has changed, the device discovery module 202 queries the existing network device for metadata that indicates the current attributes of the existing network device. Device discovery module 202 then updates device management data 214 to reflect the new network device and its corresponding attributes or the changed attributes for the existing network device.

Device discovery module 202 may also be configured to poll to detect new network devices. This may be performed using any type of messaging structure, for example, broadcast or unicast messages. For example, device discovery module 202 may be configured to periodically poll network 118 to discover new network devices. When device discovery module 202 discovers a new network device, device discovery module 202 queries the new network device for metadata that indicates the attributes of the new network device. Device discovery module 202 then updates device management data 214 to reflect the new network device and its corresponding attributes. Device discovery module 202 may also be configured to examine device management data 214 to identify known existing network devices and then poll those devices to obtain updated metadata that reflects the current status of the existing network devices. Device discovery module 202 then updates device management data 214 to reflect the current status of the existing network devices. For example, for an existing network device that has gone offline or otherwise become unavailable, device discovery module 202 may be configured to periodically poll the existing network device to determine whether its status has changed and it is now available.

Device discovery module 202 may operate in conjunction with any manual update of device management data 214. For example, some data contained in device management data 214 may be automatically generated by device discovery module 202 as previously described herein, while other data contained in device management data 214 may be manually generated by administrative personnel, for example, during device configuration or maintenance.

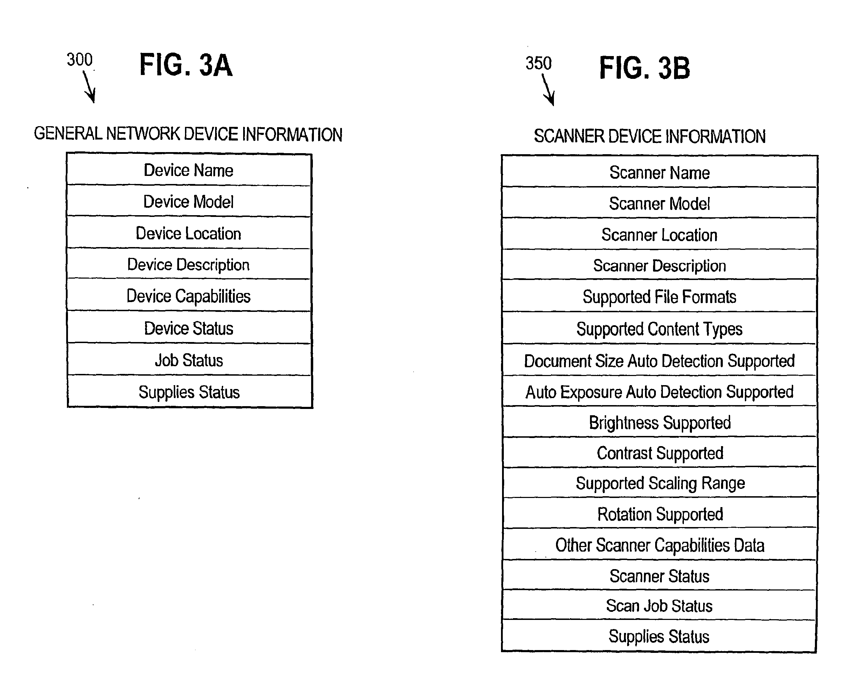

FIG. 3A is a block diagram 300 that depicts example general device information that might apply to any type of network device and maintained in device management data 214. FIG. 3B is a block diagram 350 that depicts example device information for a network scanner device that might be maintained in device management data 214. Device management data 214 may be structured, formatted and stored on storage 210 in a wide variety of ways, depending upon a particular implementation, and the invention is not limited to any particular structure or format for device management data 214.

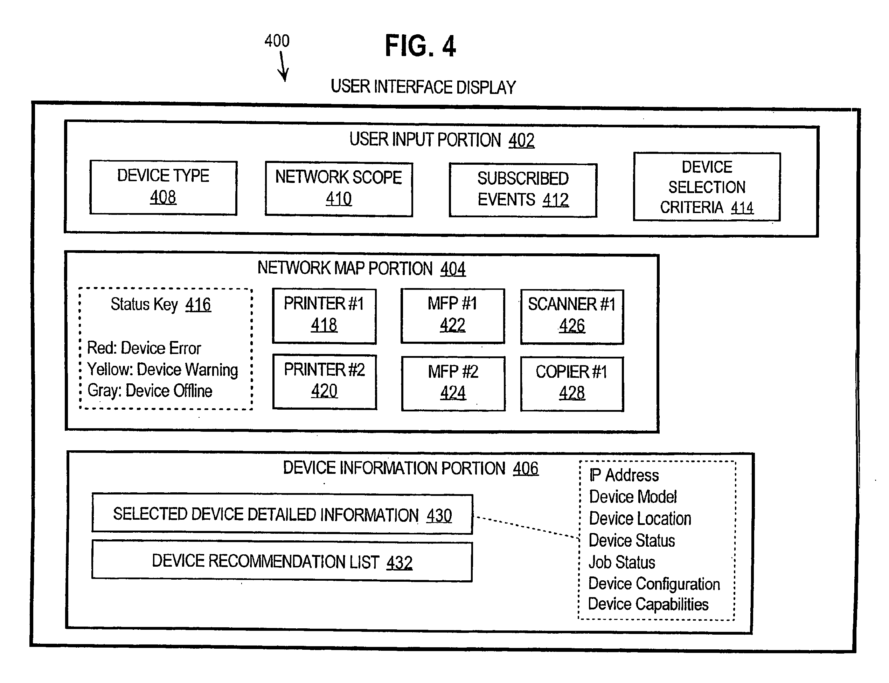

According to one embodiment of the invention, device discovery module 202 is configured to generate and provide network map data to a client device. The network map data is data which, when processed at a client device, provides a visual representation to a user of network devices that are available to process requests. The network map data is generated based upon device management data 214. For example, FIG. 4 is a block diagram that depicts an example user interface 400 that includes a user input portion 402, a network map portion 404 and a device input display portion 406.

User input portion 402 includes several user interface objects that allow a user to input various types of information. In the present example, these include a device type user interface object 408, a network scope user interface object 410, a subscribed events user interface object 412 and a device selection criteria user interface object 414. The device type user interface object 408 allows a user to specify types of devices that the user wants to monitor. For example, a user may specify that printers are to be monitored. The network scope user interface object 410 allows a user to specify the scope of one or more networks to be monitored For example, a user may specify a particular network, subnetwork or portion of a network to monitor. The subscribed events user interface object 412 allows a user to specify events to which the user wants to subscribe. The device selection criteria user interface object 414 allows a user to specify various device selection criteria used during request processing to select a network device to process requests.

Network map portion 404 displays user interface objects that indicate available network devices and their current status. In the present example, network map portion 404 includes status key information 416 and user interface objects that correspond to the available network devices. Network map portion 404 may reflect all available network devices, or only network devices that are within a network scope selected by a user. In the present example, network map portion 404 includes user interface objects that correspond to a printer #1 418, a printer #2 420, an MFP #1 422, an MFP #2 424, a scanner #1 426 and a copier #1 428. The manner in which the user interface objects are displayed within network map portion 404 may indicate attributes of the corresponding print device. More specifically, the size, shape, location, color, texture, shading or any other attribute of the user interface objects may be used to indicate attributes of the corresponding network devices. For example, a user interface object may be displayed in gray or another particular color to indicate the corresponding network device is not available. As another example, the color of a user interface object may correspond to the current status of the corresponding network device as indicated by status key information 416. Network map portion 404 may also visually depict the locations of the corresponding network devices. For example, the user interface objects that correspond to the network devices may be displayed within network map portion 404 to indicate an absolute location of the corresponding network devices.

As another example, the user interface objects that correspond to the network devices may be displayed within network map portion 404 to indicate a relative position of the corresponding network devices with respect to one or more client devices. This may allow a user to quickly identify a network device to use to process a particular request. For example, suppose that a user's client device is a mobile device such as a personal digital assistant (PDA) or laptop computer. In this situation, network map portion 404 visually depicts the location and other attributes of available network devices relative to the user's client device to assist the user in selecting a particular network device to process requests from the user's client device. According to one embodiment of the invention, a user may select a particular user interface object in network map portion 404 that corresponds to a particular available network device and then designate the selected network device as the default network device to process requests from the user's client device.

Device information portion 406 includes a selected device detailed information user interface object 430 that is associated with detailed information displayed in device information portion 406 for the current selected device. Thus, after a user selects a particular user interface object displayed in network map portion 404, the user may select the selected device detailed information user interface object 430 and the associated information for the network device that corresponds to the selected user interface object is displayed in device information portion 406. Device information portion 406 also includes a device recommendation list user interface object 432 that provides a recommended network device for a user based upon the user's device selection criteria and the attributes of the available network devices. The recommendation feature is described in more detail hereinafter.

According to one embodiment of the invention, device discovery module 202 is configured to periodically update the network map data and device information and provide updated network map data and device information to one or more client devices. Device discovery module 202 may also be configured to detect whenever device management data 214 has been updated and then to automatically generate and distribute updated network map data and device information to any number of client devices.

### VI. EVENT PROCESSING AND STATUS REPORTING

According to one embodiment of the invention, subscription management and event processing module 204 subscribes to receive events from network devices and manages the processing of events when they occur. This may include subscription management and event processing module 204 subscribing to receive events from Web services devices on behalf of client devices. In this situation, subscription management and event processing module 204 examines user preference data 212 to identify the subscriptions that should be made based upon the user subscription data contained in user preference data 212. Subscription management and event processing module 204 may also unsubscribe from certain events based upon changes in user preferences. For example, subscription management and event processing module 204 may periodically examine subscription data contained in user preference data 212. When the user preference data 212 indicates that a particular subscription is to be canceled, subscription management and event processing module 204 unsubscribes from the appropriate network device. Subscription management and event processing module 204 may also manage the expiration of subscriptions. For example, user preference data 212 may specify an expiration time for a subscription. When the subscription expires, subscription management and event processing module 204 deletes the subscription information for the expired subscription. Users may also choose to renew subscriptions that are about to expire. In this situation, subscription management and event processing module 204 may send a new expiration time to a network device to allow the subscription to continue. Users may also specify an expiration margin value for automatic renewal of subscriptions. When a subscription is within the margin value of expiration, subscription management and event processing module 204 renews the subscription.

When an event is received, subscription management and event processing module 204 determines what should be done in response to the event. According to one embodiment of the invention, in response to receiving an event, subscription management and event processing module 204 updates device management data 214 to reflect the event. For example, suppose that the event is that scanner 106 has experienced an error. In response to this error, subscription management and event processing module 204 updates device management data 214 to reflect that scanner 106 has experienced the error. Device discovery module 202 then detects the update to device management data 214 and informs the appropriate clients, as previously described herein. Alternatively, subscription management and event processing module 204 may report events directly to client devices of users who are subscribed to receive the event.

### VII. CLIENT REQUEST PROCESSING

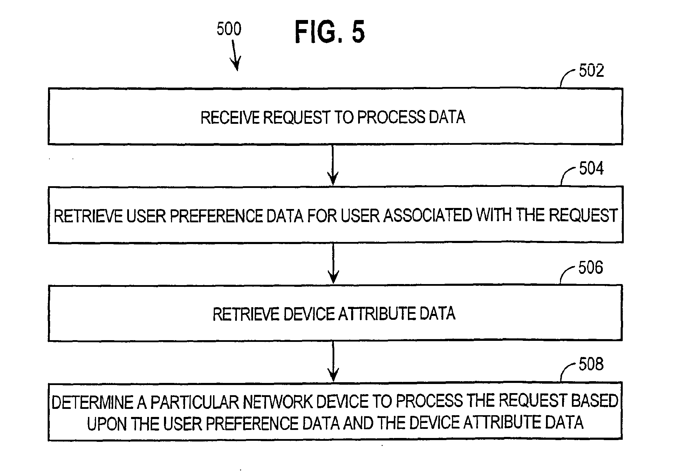

FIG. 5 is a flow diagram that depicts how device evaluation module 206 is configured to automatically determine a particular network device that is best suited to process a request from a client device based upon user preference data 212 and device management data 214, according to one embodiment of the invention. In step 502, a request to process data is received from a client device. For example, device management system 116 receives a request from client 102. In step 504, user preference data for a user associated with the request is retrieved. In the present example, user preference data 212 associated with the user of client 102 is retrieved from storage 210. In step 506, device attribute data is retrieved from device management data 214. In step 508, a particular network device is selected to process the request based upon the retrieved user preference data and the device attribute data. The particular network device is the network device having attributes that best match the desired device attributes specified in the retrieved user preference data. This may include consideration of the relative priority of device attributes indicated by the user preference data. In the present example, the user preference data 212 may specify that for this user, resolution is the most important attribute, followed by location. In this situation, a network device that has a resolution that is closest to the resolution specified for the user in the user preference data 212 is selected as the network device to process the request. In a situation where two or more network devices have the same resolution, then the desired device attribute having the next highest priority is used to select the network device to process the request. In the present example, the user preference data 212 indicates that for this user, that location is the desired device attribute having the next highest priority. Thus, among the network devices having the resolution that most closely matches the desired resolution for this user, the one having the location that is closest to the desired location attribute for this user is selected to process this request. Note that the location attribute may specify different criteria, depending upon a particular implementation, and does not necessarily mean the closest to the user. For example, a user may want to print an electronic document from a portable device to a location where the user wants to retrieve the printed version of the electronic document. This location may not be the closest location to the user's current location. Thus, the desired location attribute may specify very different types of criteria, depending upon the implementation. Although resolution and location have been used in this example, the invention is not limited to these device criteria and any type of device criteria may be used.

### VIII. NETWORK DEVICE RECOMMENDATION

According to one embodiment of the invention, device evaluation module 206 is configured to indicate to a user a recommended network device based upon the user's preference data contained in user preference data 212 and device management data 214. Device evaluation module 206 compares a user's preferred device attributes to attributes of available network devices and determines a "best match" among the available network devices. Device evaluation module 206 then generates network device recommendation data. When processed at the user's client device, the network device recommendation data indicates the recommended device. For example, suppose that a user of client 102 has indicated various desired attributes about printers. This may include performance attributes, such as speed, capabilities, such as black and white or color printing, as well as finishing options, such as stapling, hole punching, etc. Suppose that the user also indicated a location preference, with the location attribute being given the highest priority among all device attributes. In this situation, device evaluation module 206 evaluates the attributes of the available printers on the network. Referring to FIG. 4, suppose that this includes printer #1 and printer #2. Device evaluation module 206 further determines that printer #1 is closer in location to client 102 than printer #2. In this situation, device evaluation module generates network device recommendation data that indicates printer #1 as the recommended network device. When processed on client 102, the device recommendation data causes printer #1 to be visually indicated to the user as the recommended network device. This may be accomplished in many different ways, depending upon a particular implementation, and the invention is not limited to any particular approach. For example, printer #1 in network map portion 404 may be highlighted or otherwise displayed in a manner to visually indicate to the user that printer #1 is the recommended printer. The user may then select the recommended printer to process requests or select a different printer.

### IX. SUPPLY AND MAINTENANCE MANAGEMENT

According to one embodiment of the invention, supply and maintenance monitoring module 208 is configured to notify an external system or administrator when an event is received indicating that a network device requires additional supplies or service. For example, an event may be detected indicating that a printing type of network device requires additional consumables, such as paper, toner or staples. As another example, an event may be detected indicating that a network device requires service. The supply and maintenance monitoring module 208 may learn about the existence of an event from subscription management and event processing module 204. Alternatively, the supply and maintenance monitoring module 208 may be configured to periodically examine device management data 214 to determine indirectly whether an event has occurred causing a network device to require re-supply or maintenance.
For example, the supply and maintenance monitoring module 208 may detect that the current status of a particular network device has changed, as indicated by the device management data 214, and generate a corresponding notification. The format and structure of a notification may vary, depending upon a particular implementation, and the invention is not limited to any particular notification format or structure. For example, the supply and maintenance monitoring module 208 may generate a message for administrative personnel that is displayed on a GUI. As another example, the supply and maintenance monitoring module 208 may generate and provide a message to an external system.

Conventional notification mechanisms generally only provide a notification when action is required and do not provide any confirmation that a required action has been completed. For example, conventional notification mechanism may provide a notification when a device requires service, but do not provide a confirmation when the required service has been performed. According to one embodiment of the invention, the supply and maintenance monitoring module 208 is configured to detect when required supplies have been replenished or when required maintenance has been performed. For example, suppose that scanner 106 generates an event indicating that service is required. Subscription management and event processing module 204 detects the event and updates device management data 214 to indicate the condition, i.e., that scanner 106 requires service. As previously described herein, the subscription management and event processing module 204 may also notify the supply and maintenance monitoring module 208. The supply and maintenance monitoring module 208 notifies administrative personnel and/or an external system of this condition and then monitors scanner 106 to determine whether the request service has been provided. The supply and maintenance monitoring module 208 also determines when the requested service has been provided and then generates and transmits an additional notification to the administrative personnel or the external system. The supply and maintenance monitoring module 208 may determine that the required service has been provided using a variety of techniques, depending upon a particular implementation. For example, the supply and maintenance monitoring module 208 may be notified by subscription management and event processing module 204 in response to an event indicating that the required service has been completed. As another example, the supply and maintenance monitoring module 208 may monitor the device management data 214 to determine that the requested service has been performed. As yet another example, the supply and maintenance monitoring module 208 may be configured to periodically poll scanner 106 to determine when the required service has been performed.

### X. IMPLEMENTATION MECHANISMS

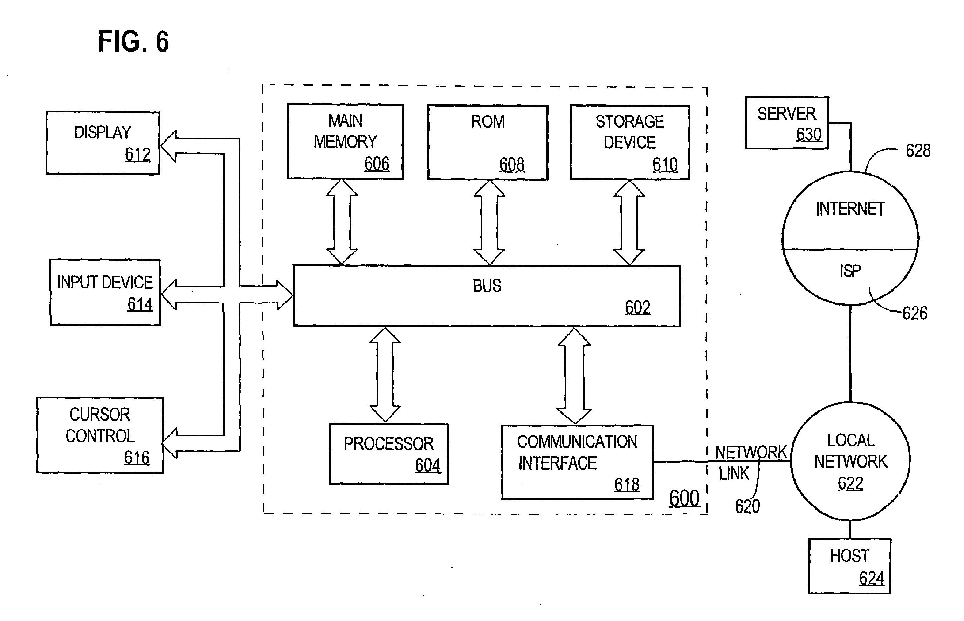

The device management system for processing client requests described herein may be implemented in a wide variety of contexts and on any type of computing architecture. The various elements of device management system 118 depicted in FIG. 2 and described herein may be implemented using hardware, software or any combination of hardware and software. Furthermore, although the various elements of device management system 118 are depicted as residing on a separate network device in FIG. 1, the invention is not limited to this context, and any of the elements of device management system 118 may be implemented on other devices, for example, on client 102. The invention described herein is not limited to the example network devices depicted and described herein and is applicable to any type of network device. For example, the approach is applicable to projector devices that include, as part of their capabilities, specified video quality and input format support. For purposes of explanation, FIG. 6 is a block diagram that illustrates an example computer system 600 upon which an embodiment of the invention may be implemented. Computer system 600 includes a bus 602 or other communication mechanism for communicating information, and a processor 604 coupled with bus 602 for processing information. Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a cathode ray tube (CRT), for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

The invention is related to the use of computer system 600 for implementing the techniques described herein. According to one embodiment of the invention, those techniques are performed by computer system 600 in response to processor 604 executing one or more sequences of one or more instructions contained in main memory 606. Such instructions may be read into main memory 606 from another machine-readable medium, such as storage device 610. Execution of the sequences of instructions contained in main memory 606 causes processor 604 to perform the process steps described herein. In alternative embodiments, hard-wired circuitry may be used in place of or in combination with software instructions to implement the invention. Thus, embodiments of the invention are not limited to any specific combination of hardware circuitry and software.

The term "machine-readable medium" as used herein refers to any medium that participates in providing data that causes a machine to operation in a specific fashion. In an embodiment implemented using computer system 600, various machine-readable media are involved, for example, in providing instructions to processor 604 for execution. Such a medium may take many forms, including but not limited to, non-volatile media, volatile media, and transmission media. Non-volatile media includes, for example, optical or magnetic disks, such as storage device 610. Volatile media includes dynamic memory, such as main memory 606. Transmission media includes coaxial cables, copper wire and fiber optics, including the wires that comprise bus 602. Transmission media can also take the form of acoustic or light waves, such as those generated during radio-wave and infra-red data communications.

Common forms of machine-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, a carrier wave as described hereinafter, or any other medium from which a computer can read.

Various forms of machine-readable media may be involved in carrying one or more sequences of one or more instructions to processor 604 for execution. For example, the instructions may initially be carried on a magnetic disk of a remote computer. The remote computer can load the instructions into its dynamic memory and send the instructions over a telephone line using a modem. A modem local to computer system 600 can receive the data on the telephone line and use an infra-red transmitter to convert the data to an infra-red signal. An infra-red detector can receive the data carried in the infra-red signal and appropriate circuitry can place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the world wide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are exemplary forms of carrier waves transporting the information.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618. The received code may be executed by processor 604 as it is received, and/or stored in storage device 610, or other non-volatile storage for later execution. In this manner, computer system 600 may obtain application code in the form of a carrier wave.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, properly, feature, advantage or attribute that is not expressly recited in a claim should limit the scope of such claim in any way. The specification and drawings are, accordingly, to be regarded in an illustrative rather than a restrictive sense.

## Claims

1. A computer-implemented method for processing requests from client devices, the computer-implemented method comprising:
receiving from a client device over a communications network a request to process data;
retrieving user preference data for a user associated with the request to process data received from the client device, wherein the user preference data indicates one or more attributes that the user would like a network device that processes the request to have;
determining, based upon the user preference data and network device attribute data that indicates one or more attributes of a plurality of available network devices, a particular network device from the plurality of available network devices to process the request; and
transmitting the request to the network device.

2. A computer-implemented method according to Claim 1, wherein the user preference data indicates a priority of the one or more attributes indicated by the user preference data.

3. A computer-implemented method according to Claim 1 or 2, wherein the one or more attributes indicated by the user preference data include one or more of speed, resolution and finishing options.

4. A computer-implemented method according to Claim 1,2 or 3, wherein the one or more attributes indicated by the user preference data include location.

5. A computer-implemented method according to any one of the preceding claims, further comprising:
detecting an event indicating that a new network device is available to process data;
in response to detecting the event indicating that the new network device is available to process data,
querying the new network device to obtain data that indicates one or more attributes of the new network device, and
updating the device attribute data to reflect the one or more attributes of the new network device.

6. A computer-implemented method according to any one of the preceding claims, further comprising:
detecting an event that indicates a change in status of the particular network device from the plurality of network devices, the availability of an additional network device or the unavailability of a current network device;
if the event indicates a change in status of the particular network device from the plurality of network devices, then updating the device attribute data to reflect the change in status of the particular network device from the plurality of network devices;
if the event indicates the availability of an additional network device, then updating the device attribute data to reflect the availability of the additional network device; and
optionally, if the event indicates the unavailability of a current network device, then updating the device attribute data to reflect the unavailability of the current network device.

7. A computer-implemented method according to Claim 6, further comprising:
if the event indicates a change in status of the particular network device from the plurality of network devices, then generating report data that reflects the change in status of the particular network device from the plurality of network devices;
if the event indicates the availability of an additional network device, then generating report data that reflects the availability of an additional network device; and
providing the report data to the client device.

8. A computer-implemented method according to any one of the preceding claims, further comprising:
generating and providing to the client device user interface data which, when processed at the client device, causes one or more user interface objects to be displayed on a user interface associated with the client device, wherein the one or more user interface objects correspond to the plurality of available network devices and provide a visual indication to the user of how well each network device from the plurality of available network devices satisfies the user preference data.

9. A computer-implemented method according to Claim 8, wherein the user interface data includes data which, when processed at the client device, provides a visual indication to the user of a network device from the plurality of available network devices that best satisfies the user preference data.

10. A computer-implemented method according to Claim 8 or 9, wherein the user interface data includes data which, when processed at the client device, provides a visual indication to the user of one or more locations of the plurality of available network devices relative to a location of the client device.

11. A computer-implemented method according to any one of the preceding claims, further comprising:
detecting a first event indicating that the particular network device from the plurality of available network devices requires service;
generating, in response to detecting the first event, first report data that indicates that the particular network device from the plurality of available network devices requires service;
providing the first report data to a service provider;
detecting a second event indicating that the particular network device from the plurality of available network devices has received the required service;
generating, in response to detecting the second event, second report data that indicates that the particular network device from the plurality of available network devices has received the required service; and
providing the second report data to the service provider.

12. A computer-implemented method according to any one of the preceding claims, further comprising:
generating and providing suggestion data to the client device, wherein the suggestion data indicates one or more suggested network devices from the plurality of available network devices that satisfy the user preference data,
receiving from the client device selection data that indicates a user selection of a selected network device from the one or more suggested network devices, and
providing the request to the selected network device.

13. A computer-program for processing requests from client devices, the computer-program comprising instructions which, when processed by one or more processors, instruct the processors to perform a method according to any one of the preceding claims.

14. An apparatus for processing requests from client devices, the apparatus comprising a memory storing a program according to claim 13.
